# EUROPEAN PATENT SPECIFICATION

(11) **EP 2 720 558 B1**
(45) Date of publication and mention of the grant of the patent: **19.04.2017**
(21) Application number: 12725376.3
(22) Date of filing: 30.05.2012
(51) Int. Cl.: A23L 5/00

(54) **BOUILLON TABLET PROCESS**
BOUILLONTABLETTENVERFAHREN
PROCÉDÉ POUR TABLETTE DE BOUILLON

(30) Priority: 16.06.2011 EP 11170231
(43) Date of publication of application: 23.04.2014
(73) Proprietor: Nestec S.A., 1800 Vevey (CH)
(72) Inventor: SCHROEDER, Caroline, 20253 Hamburg (DE); KRAUCH, José Guillermo, 78224 Singen (DE)
(74) Representative: Mollet, Beat Max
(86) International application number: PCT/EP2012/060193
(87) International publication number: WO 2012/171801

(56) References cited:
- EP-A1- 1 344 458
- EP-A1- 1 820 409
- WO-A1-02/069742
- WO-A1-03/000077
- WO-A1-2004/049831
- WO-A1-2007/104326
- US-A1- 2007 134 397
- PALZER ET AL: "Agglomeration of pharmaceutical, detergent, chemical and food powders Similarities and differences of materials and processes", POWDER TECHNOLOGY, ELSEVIER SEQUOIA, LAUSANNE, CH, vol. 206, no. 1-2, 18 January 2011 (2011-01-18), pages 2-17, XP027547542, ISSN: 0032-5910 [retrieved on 2010-05-15]

## Description

### TECHNICAL FIELD

This invention relates to a process for preparing a bouillon tablet having two or more layers and to the bouillon tablet prepared by the process. In particular, the invention relates to a process that uses a double-punch press for preparing bouillon tablets.

### BACKGROUND

Cooking aids in the form of bouillon concentrates are well known and are commonly used to impart flavor and aroma to dishes. Such cooking aids usually contain fat (or oil), thickeners (e.g. starch-based thickeners or gums), salt, flavorings, sugars, taste enhancers (e.g. monosodium glutamate, ribonucleotides), spices, fillers (e.g. maltodextrins), herbs, and/or vegetable pieces.

These cookings aids can be manufactured in a variety of shapes, consistencies and sizes, including tablets, cubes, pills and powders. They may be in liquid, solid or pasty form.

Those skilled in the art distinguish two types of solid, dry bouillons. These are "hard bouillons" and "soft bouillons". They differ mainly in their consistency, and therefore different equipment for their production is usually necessary. Whereas hard bouillons have a rigid and brittle consistency and cannot be easily deformed by hand, soft bouillons have a pasty consistency.

Hard bouillons are made of a mass typically containing fat in the range of 1-20% and a crystalline fraction in the range of 40-60%. The hard bouillon mass has a consistency which makes it free flowing and pressable using tablet presses, such as presses of the Bonals type. These presses usually apply forces up to 1 kN. Soft bouillons usually contain higher amounts of fats or oils (typically between 18-25%), which results in a pasty consistency of the mass. To produce a soft bouillon tablet, equipment designed to form, dose and pack a pasty mass is needed. For example, dosing and wrapping machines of the Corrazza or Benhill type are generally used for forming soft bouillon tablets and other products with similar consistency, such as butter or cheese.

Solid bouillons are traditionally produced by mixing one or more of the above mentioned ingredients to form a single mass and then pressing, extruding, compacting or casting the mass for form the bouillon of the desired shape. During this process, the ingredients are subjected to high levels of mechanical stress. This can be a problem for bouillons that include garnishes, herbs, spices and vegetable pieces. The severe mechanical stresses during mixing and shaping often result in disintegration of such ingredients leading to poor visual appeal after dissolution of the bouillon in water.

There have been several attempts to produce bouillons with improved visual quality by adding large vegetable pieces to the top layer or surface of the bouillon, so that the vegetable pieces are visible to the consumer.

EP 888723 discloses a culinary cooking aid in form of a stick or bar, which consists of a core made from salt, monosodium glutamate (MSG) and fat, and a coating comprising visible components such as pieces of vegetables, fruits, and aromatic herbs. These visible components are adhered to the core using a fat or hydrocolloid based binder. The process described follows the standard procedure for preparing a hard or soft bouillon tablet where the core is coated with the binder and the visible components are subsequently added to the bouillon surface. As the vegetable pieces are only weakly adhered to the bouillon surface, the amount of visible elements which can be incorporated into the cooking aid is limited. Furthermore, such a product is prone to damage after packaging during transport and subsequent handling.

WO 2002/069742 discloses a multi-ingredient culinary aid for the preparation of liquid food, comprising at least two partial volumes which can be distinguished by vision or touch. One part can consist of herbs or vegetable pieces, which are bound loosely to the other part which is a pasty bouillon mass. The process described for obtaining such a product consists of the following steps: a) the die of a tablet press is lined with packaging material, b) the vegetable pieces are filled, and c) the pasty bouillon mass is filled on top and the content of the die is compacted. One problem with this approach is that the product, due to weak coherence of its particles, requires equipment which allows direct forming into the packaging material.

Some known processes require the dried herbs and vegetable pieces to have an adjusted water content (by moistening) to prevent damage to the herbs during the compacting phase. Examples are described in EP 0326525, US 3,385,715 and WO 2007/068332. As a consequence of the adjusted water content, a later drying step is necessary to obtain a stable product. This drying step adds complexity to the production process, and detrimentally affects the organoleptic quality of the herbs and vegetable pieces. EP 0326525 describes a process in which vegetables are freeze dried, rehydrated to 20% moisture, compressed and dried to 3 % moisture. US 3,385,715 discloses compaction of freeze dried vegetables by compression at a moisture content of 5-15%, followed by drying to 3 % moisture.

WO 2007/068332 describes a process for obtaining a culinary cooking aid in the form of a solid concentrate, suitable for preparing broths, bouillons, and soups etc. The cooking aid has one or more compressed particles or layers consisting of dry herbs and/or vegetables. Three processes are described, all relying on one common principle: a) pressing herbs and/or vegetable pieces with an adjusted moisture content (5-30% wt) to a compressed particle or layer, b) forming a mixture of bulk ingredients (comprising salt, taste enhancers, sugars, fat, oil, gums, thickeners etc.), c) combining the particles obtained under a) with the mixture of bulk ingredients obtained under b) by forming (preferably pressing), jointly packing or adhering to each other. Premature crumbling during processing is avoided by creating a particle/layer of firmly bound herbs/vegetable matter before combining it with the bulk ingredients.

There is no clear description in WO 2007/068332 of the operating process for producing a hard bouillon tablet with a layer of vegetable matter. However, in order to produce a hard bouillon type tablet, the herb/vegetable matter must undergo two compression steps, the first to create a particle/layer of herbs and/or vegetables, and the second to press the particle/layer together with the bulk material. Moreover, either the vegetable layer is compacted and stays in the die of the press with subsequent filling and pressing of the bulk material, or the vegetable layer is formed separately in another step. If the vegetable layer remains in the die when the bulk material is filled and pressed, dosing of the vegetable matter into the bores of the die is inaccurate. This results in an uneven interface between the layers, and therefore a less attractive visual appearance of the final product. Forming the vegetable layer in a separate step must drastically affect the cost effectiveness and efficiency of the whole manufacturing process.

There is therefore a need for a process for manufacturing hard bouillons having one or more layers of visually appealing elements, which enables improved process control through accurate dosing, gentle handling and processing of dried particles, such as vegetable pieces and herbs. It has now been found that this can be achieved, at least partially, by avoiding a drying step, having only a single compression step, and using a rotary double-punch press.

It is therefore an object of the invention to provide a process that overcomes or ameliorates, at least in part, one or more of the disadvantages of known process described above.

### SUMMARY OF THE INVENTION

In a first aspect, the invention provides a process for preparing a bouillon tablet having two or more layers comprising the steps:
(a) forming a first layer of the tablet comprising a mixture of two or more of salt, taste enhancer, sugar, and fat (or oil);
(b) forming a second layer of the tablet by adding to the first layer a mixture comprising one or more of herbs, garnishes, vegetable pieces, and spices; and
(c) compressing the two layers to form the tablet
and wherein the tablet is formed using a rotary double-punch press.

In preferred embodiments of the invention, the one or more of herbs, garnishes, vegetable pieces, and spices are coated with fat or oil, preferably hydrogenated palm oil.

It is preferred that the compression force applied to form the first layer is less than 40%, preferably between 15% and 35%, of the compression force applied to form the tablet in step (c). Further, it is preferred that the compression force applied to form the first layer is 0.1 to 1.5 kN, preferably 0.5 to 1.0 kN, and that the compression force applied to form the tablet in step (c) is 0.8 to 6 kN, preferably 4 to 5 kN.

The second layer is preferably 1-35%, typically 1-15%, by weight of the tablet.

In preferred embodiments of the invention, the mixture comprising one or more of herbs, garnishes, vegetable pieces, and spices has a moisture content below 7% by weight, preferably below 5% by weight.

The tablet is formed using a rotary double-punch press, which preferably includes at least one die having a die-bore and the first layer is formed by adding the mixture of two or more of salt, taste enhancer, sugar, and fat (or oil) into the die-bore and applying a compression force. The mixture comprising one or more of herbs, garnishes, vegetable pieces, and spices is then preferably added to the first layer in the die-bore and a compression force applied.

In a second aspect, the invention provides a bouillon tablet of the hard bouillon type prepared according to the process of the invention.

In a further aspect, the invention provides the use of a bouillon tablet prepared according to the process of the invention for the preparation of a soup, sauce, bouillon, or gravy, or for use as a seasoning.

### BRIEF DESCRIPTION OF THE FIGURE

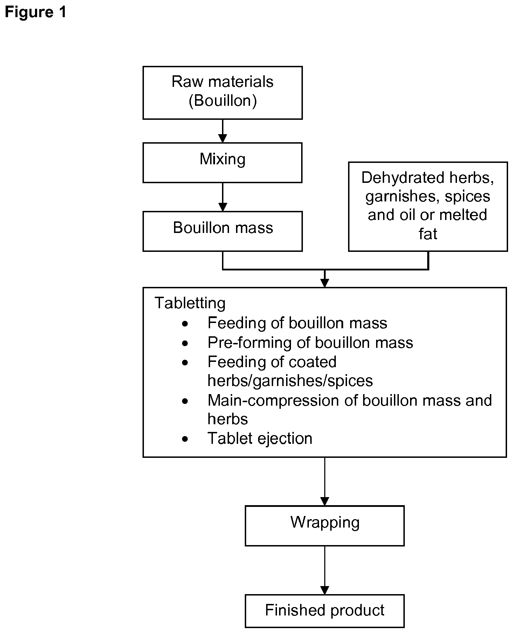

Figure 1 is a flow diagram of one embodiment of the process of the invention.

### DETAILED DESCRIPTION

There is a need for a process for manufacturing a cooking aid of the hard bouillon type having one or more layers comprising large (e.g. 0.5-5 mm), visually appealing particles, such as dehydrated herbs, garnishes, vegetable particles or spices. The process should allow for the accurate dosing of the herbs/vegetable particles and even layers during manufacturing and in the final product. Furthermore, the process should allow for gentle handling of the herbs/vegetable particles by minimizing the mechanical and osmotic stresses applied to the particles. In particular, the process seeks to achieve increased efficiencies by a higher output per time relative to a conventional single-punch process. It has now been found that the above mentioned benefits and objectives can, at least partially, be achieved by a process suited to the use of a rotary double-punch press.

The following terms and their meanings are applicable throughout this specification:
The term "pasty" relates to a consistency of a mass which is easily deformable by hand, yet is shape retaining and does not disintegrate or crumble.
The term "fat" refers to a lipid which is solid at ambient temperatures.
The term "oil" refers to a lipid which is liquid at ambient temperatures.
The term "tablet" means a compacted, formed body, which has the shape of a cuboid, cube, spheroid, ball, stick or any non-geometric, irregular shape.
The term "vegetable matter" is to be understood as visible herbs, spices, vegetable particles with or without coating.
The term "taste enhancer" refers to any substance, compound or ingredient which is capable of enhancing the taste and aroma perception of taste active ingredients or compounds.

Throughout this specification, all percentages are given as weight by weight percent (%w/w).

The invention relates to a process for preparing a bouillon having two or more layers, comprising the steps:
(a) forming a first layer of the tablet comprising a mixture of two or more of salt, taste enhancer, sugar, and fat (or oil);
(b) forming a second layer of the tablet by adding to the first layer a mixture comprising one or more of herbs, garnishes, vegetable pieces, and spices; and
(c) compressing the two layers to form the tablet.
and wherein the tablet is formed using a rotary double-punch press.

Figure 1 shows the general steps of a typical bouillon tablet manufacturing process of the invention.

The mixture of step (a) usually comprises salt, taste enhancer, sugar(s) and fat and/or oil. This mixture typically constitutes the bulk of bouillon tablet ingredients and provides a base for imparting taste, aroma and texture to a dish. In addition to these basic ingredients, the mixture preferably comprises one or more of herbs, spices, flavourings, hydrocolloids, maltodextrin, starches or mixtures thereof. Furthermore, biohydrolysates, colourings, cereal or vegetable flours or fibres and/or creamers may be present. Salt is preferably sodium chloride, but can also comprise other edible salts capable of imparting or enhancing a salty taste perception, such as potassium chloride. The taste enhancer usually comprises salts of glutamic acid, preferably monosodium glutamate (MSG), which can be present as low as intrinsic amounts of MSG from any of the mentioned ingredients. Synergistic effects of MSG with other ingredients, such as the ribonucleotides IMP and GMP, may be utilized for enhancing the taste of the product. Sugars, such as glucose or corn syrup, maltodextrines, lactose or saccharose can be used as fillers and to adjust the pressing behaviour of the mass.

The type and amount of fat and/or oil depends on the desired attributes of the final product. Preferably, vegetable fat, such as palm fat, with a melting point over 50°C, is used. Other desired product attributes, for example a low content of trans-fatty acids, can be obtained by varying the quantity and type of fat having the desired characteristics.

The mixture of step (b) contains one or more of herbs, garnishes, vegetable pieces, and spices. Typical herbs or vegetable matter which can be used, may be selected from the group of parsley, basil, dill, chives, rosemary, thyme, oregano, tomato, leek, onion, garlic, mushrooms, broccoli, carrot, chillies, bell pepper, sage, and coriander. Preferably, dried vegetable matter having a water content of 3-6% by weight is used. Air dried or freeze dried vegetable matter may be used. The method of drying is not important. The garnishes may also be of non-plant origin, such as dried meat, dried seafood, or croutons.

Surprisingly, the inventors have found that coating of the vegetable matter with fat or oil can effectively improve the resistance of the vegetable matter to major breakage or damage during pressing. This means that moistening and subsequent drying of the vegetable matter, which is detrimental to its organoleptic properties and which adds another operation to the process, is avoided. The fat or oil coating has several additional advantages. The lipid coating supports the migration of fat and/or oil from the bulk material and thus enhances cohesion of the particles. This is not only beneficial to the mechanical stability of the bouillon tablet, but also prevents dust formation and waste during handling and dosing. Furthermore, the fat or oil coating not only forms a protective layer, but also enhances the visual quality of the vegetable matter in terms of colour and shininess. Vegetable fat, such as hydrogenated palm oil, which can melt at temperatures higher than 50°C and solidify during mixing, is preferred. However, the addition of other edible lipids with functional benefits, e.g. antioxidant properties, is possible.

Coating of the vegetable matter can be effectively achieved by using a drum mixer (e.g. Kreber type), wherein the ingredients are mixed preferably at medium rotation speed. Melted fat and/or oil is sprinkled onto the mixture which is then mixed for a time, preferably less than 30 s. Preferably, the amount of fat or oil in the mixture is between 5% and 25% by weight. The exact amount added depends on size, form, type (e.g. leafy herbs, florets, dices, slices etc.) and the ratio of the ingredients of the mixture (i.e. the recipe), and is adjusted to ensure sufficient flowability of the mass for subsequent handling and dosing.

For producing the bouillon tablet of this invention, a rotary double-punch press is suitable. A rotary double-punch press in the context of this invention generally comprises a rotor rotatably driven about a vertical axis that has a die-plate and upper and lower punches. The punches are guided vertically by guides of the rotor and interact with die holes in the die-plate. At least two compression stations are needed (i.e. pre-compression and main compression) where an upper pressure and a lower pressure are provided by the punches. At each station, the punches compress the material contained within the die hole. Subsequent to the main compression step, the lower punch causes the compressed tablet to eject from the die. The tablet is then removed from the die-plate by a stripper in the direction of a discharge chute.

A double-punch process offers several advantages over a conventional single-punch process.

Contrary to the conventional single-punch process used for bouillon pressing, a double-punch rotary press allows for dosing of the ingredients through separate feeders before different compression stations. This makes it possible to separately handle the masses to be compacted (bouillon mass mixture and vegetable matter/garnishes mixture). As a consequence, gentle handling and dosing of the fragile vegetable matter is possible. Pieces of vegetable matter, i.e. herbs and garnishes, therefore remain intact and undamaged and largely retain their organoleptic qualities throughout the manufacturing process.

Another advantage of a double-punch process over a single-punch process is the ability to use a pre-compression step. This enables the first layer to be formed with a flat and even surface and thus a higher accuracy of dosing and manufacturing is achieved. The result is an attractive and smooth interface between the layers, giving a superior visual appearance to the product. Furthermore, the accuracy achieved improves the process control of the dosing step by reducing the variability of dosed amounts. Weight variations and consequently overdosing can be critical, especially when active ingredients, such as vitamins or trace elements are part of the recipe.

In a single-punch process, where only one punch exerts the compression force against a rotating counter pressure plate, the tablet is exposed to lateral shear forces upon ejection. This shear force can be harmful to a layer of vegetable material. In a double-punch process, both punches travel with the die-hole until the tablet is ejected by the lower punch, thus no such shear forces are exerted on the tablet.

In a typical process using a rotary double-punch press, the mixture of two or more of salt, taste enhancer, sugar, and fat (or oil), referred to in step (a) of the process, is fed to the first compression station of the press from which it is dosed into the die-bore. Typically, for a conventional hard bouillon tablet, 5 to 15 g, preferably 8 to 12 g of bulk material may be dosed. A pre-compression step, preferably exerting a force of 0.1 to 1.5 kN, more preferably 0.5 to 1.0 kN, is then applied resulting in an even distribution of the bulk material in the die-bore.

The mixture of one or more of herbs, garnishes, vegetable pieces, and spices, referred to in step (b) of the process, is fed to the second compression station, where it is dosed onto the preformed bulk material (the first layer of step (a)). A second (final) compression is applied which, depending on the recipe, may exert a force of 0.8 to 6 kN. Contrary to fat based recipes, oil based recipes usually require higher final compression forces, preferably 4 to 5 kN.

While not essential for the preparation of a bouillon tablet of the invention, it is preferred that the ingredients of the second layer, i.e. the herbs, garnishes, vegetable pieces, and spices, are coated with fat or oil. During the final compression step, those ingredients from the first layer that have binding properties, e.g. fats and oils, can penetrate into the second layer and interact synergistically with the fat or oil coated ingredients of the first layer and effect good cohesion between both layers.

After the final compression, the formed tablet is ejected from the die and further processed, e.g. conveyed to a wrapping machine.

It is to be appreciated that although the invention has been described with reference to specific embodiments, variations and modifications may be made without departing from the scope of the invention as defined in the claims. Furthermore, where known equivalents exist to specific features, such equivalents are incorporated as if specifically referred to in this specification.

## Claims

1. A process for preparing a bouillon tablet having two or more layers comprising the steps:
(a) forming a first layer of the tablet comprising a mixture of two or more of salt, taste enhancer, sugar, and fat (or oil);
(b) forming a second layer of the tablet by adding to the first layer a mixture comprising one or more of herbs, garnishes, vegetable pieces, and spices; and
(c) compressing the two layers to form the tablet
and wherein the tablet is formed using a rotary double-punch press.

2. A process according to claim 1, wherein the one or more of herbs, garnishes, vegetable pieces, and spices are coated with fat or oil.

3. A process according to claim 2, wherein the fat is hydrogenated palm oil.

4. A process according to any one of claims 1 to 3, wherein the compression force applied to form the first layer is less than 40%, preferably between 15% and 35%, of the compression force applied to form the tablet in step (c).

5. A process according to claim 4, wherein the compression force applied to form the first layer is 0.1 to 1.5 kN, preferably 0.5 to 1.0 kN.

6. A process according to claim 4 or claim 5, wherein the compression force applied to form the tablet in step (c) is 0.8 to 6 kN, preferably 4 to 5 kN.

7. A process according to any one of claims 1 to 6, wherein the second layer is 1-35%, preferably 1-15%, by weight of the tablet.

8. A process according to any one of claims 1 to 7, wherein the mixture comprising one or more of herbs, garnishes, vegetable pieces, and spices has a moisture content below 7% by weight, preferably below 5% by weight.

9. A process according to any one of claims 1 to 8, wherein the first layer is formed by adding the mixture of two or more of salt, taste enhancer, sugar, and fat (or oil) into a die-bore of the rotary double-punch press and then applying a compression force.

10. A process according to any one of claims 1 to 9, wherein the mixture comprising one or more of herbs, garnishes, vegetable pieces, and spices is added to the first layer in the die-bore and a compression force applied.

11. A bouillon tablet of the hard bouillon type prepared according to the process of any one of claims 1 to 10.

12. The use of a bouillon tablet prepared according to any one of claims 1 to 10 for the preparation of a soup, sauce, bouillon, or gravy, or for use as a seasoning.

## Patentansprüche

1. Prozess zur Zubereitung einer Bouillon-Tablette mit zwei oder mehreren Schichten, folgende Schritte umfassend:
(a) Formen einer ersten Schicht der Tablette, umfassend ein Gemisch aus zwei oder mehreren von Salz, Geschmacksverstärker, Zucker und Fett (oder Öl);
(b) Formen einer zweiten Schicht der Tablette durch Zugabe eines Gemischs umfassend ein oder mehrere von Kräutern, Garnierungen, Gemüsestücken und Gewürzen zur ersten Schicht; und
(c) Komprimieren der zwei Schichten, um die Tablette zu formen
und wobei die Tablette unter Verwendung einer Rotations-Doppelstanzmaschine geformt wird.

2. Prozess nach Anspruch 1, wobei das eine oder die mehreren von Kräutern, Garnierungen, Gemüsestücken und Gewürzen mit Fett oder Öl beschichtet ist bzw. sind.

3. Prozess nach Anspruch 2, wobei es sich bei dem Fett um gehärtetes Palmöl handelt.

4. Prozess nach einem der Ansprüche 1 bis 3, wobei die zum Formen der ersten Schicht angelegte Kompressionskraft weniger als 40 %, vorzugsweise zwischen 15 % und 35 % der Kompressionskraft beträgt, die in Schritt (c) zum Formen der Tablette angelegt wird.

5. Prozess nach Anspruch 4, wobei die Kompressionskraft, die zum Formen der ersten Schicht angelegt wird, 0,1 bis 1,5 kN, vorzugsweise 0,5 bis 1,0 kN beträgt.

6. Prozess nach Anspruch 4 oder Anspruch 5, wobei die Kompressionskraft, die zum Formen der Tablette in Schritt (c) angelegt wird, 0,8 bis 6 kN, vorzugsweise 4 bis 5 kN beträgt.

7. Prozess nach einem der Ansprüche 1 bis 6, wobei die zweite Schicht 1 bis 35 %, vorzugsweise 1 bis 15 % des Gewichtsanteils der Tablette ausmacht.

8. Prozess nach einem der Ansprüche 1 bis 7, wobei das Gemisch, das eines oder mehrere von Kräutern, Garnierungen, Gemüsestücken und Gewürzen umfasst, einen Feuchtigkeitsgehalt unter 7 Gew.-%, vorzugsweise unter 5 Gew.-%, aufweist.

9. Prozess nach einem der Ansprüche 1 bis 8, wobei die erste Schicht gebildet wird durch Zugeben des Gemischs aus zwei oder mehreren von Salz, Geschmacksverstärker, Zucker und Fett (oder Öl) in eine Matrizenbohrung der Rotations-Doppelstanzmaschine und anschließendem Anlegen einer Kompressionskraft.

10. Prozess nach einem der Ansprüche 1 bis 9, wobei das Gemisch, das eines oder mehrere von Kräutern, Garnierungen, Gemüsestücken und Gewürzen umfasst, der ersten Schicht in der Matrizenbohrung zugegeben wird und eine Kompressionskraft angelegt wird.

11. Bouillon-Tablette vom Typ Hartbouillon, hergestellt gemäß dem Prozess nach einem der Ansprüche 1 bis 10.

12. Verwendung einer nach einem der Ansprüche 1 bis 10 hergestellten Bouillon-Tablette zur Zubereitung einer Suppe, Sauce, Bouillon oder Bratensoße, oder zur Verwendung als eine Würze.

## Revendications

1. Procédé de préparation d'un comprimé de bouillon comportant deux couches ou plus, comprenant les étapes de :
(a) formation d'une première couche du comprimé comprenant un mélange de deux éléments ou plus parmi du sel, un exhausteur de goût, du sucre et de la matière grasse (ou de l'huile) ;
(b) formation d'une deuxième couche du comprimé en ajoutant à la première couche un mélange comprenant un ou plusieurs éléments parmi des herbes, des garnitures, des morceaux de légumes et des épices ; et
(c) compression des deux couches pour former le comprimé
et dans lequel le comprimé est formé en utilisant une presse rotative à double poinçon.

2. Procédé selon la revendication 1, dans lequel le ou les éléments parmi les herbes, les garnitures, les morceaux de légumes et les épices sont enrobés de matière grasse ou d'huile.

3. Procédé selon la revendication 2, dans lequel la matière grasse est de l'huile de palme hydrogénée.

4. Procédé selon l'une quelconque des revendications 1 à 3, dans lequel la force de compression appliquée pour former la première couche est inférieure à 40 %, de préférence entre 15 % et 35 %, de la force de compression appliquée pour former le comprimé à l'étape (c).

5. Procédé selon la revendication 4, dans lequel la force de compression appliquée pour former la première couche va de 0,1 à 1,5 kN, de préférence 0,5 à 1,0 kN.

6. Procédé selon la revendication 4 ou la revendication 5, dans lequel la force de compression appliquée pour former le comprimé à l'étape (c) va de 0,8 à 6 kN, de préférence, 4 à 5 kN.

7. Procédé selon l'une quelconque des revendications 1 à 6, dans lequel la deuxième couche représente 1 à 35 %, de préférence 1 à 15 % en poids du comprimé.

8. Procédé selon l'une quelconque des revendications 1 à 7, dans lequel le mélange comprenant un ou plusieurs éléments parmi des herbes, des garnitures, des morceaux de légumes et des épices a une teneur en humidité inférieure à 7 % en poids, de préférence inférieure à 5 % en poids.

9. Procédé selon l'une quelconque des revendications 1 à 8, dans lequel la première couche est formée en ajoutant le mélange de deux éléments ou plus parmi du sel, un exhausteur de goût, du sucre et de la matière grasse (ou de l'huile) dans un orifice de matrice de la presse rotative à double poinçon, puis en appliquant une force de compression.

10. Procédé selon l'une quelconque des revendications 1 à 9, dans lequel le mélange comprenant un ou plusieurs éléments parmi des herbes, des garnitures, des morceaux de légumes et des épices est ajouté à la première couche dans l'orifice de matrice, puis une force de compression est appliquée.

11. Comprimé de bouillon du type bouillon dur, préparé selon le procédé de l'une quelconque des revendications 1 à 10.

12. Utilisation d'un comprimé de bouillon préparé selon l'une quelconque des revendications 1 à 10 pour la préparation d'une soupe, d'une sauce, d'un bouillon ou d'une sauce au jus ou pour une utilisation en tant qu'assaisonnement.
